# EUROPEAN PATENT APPLICATION

(11) **EP 1 435 743 A1**
(43) Date of publication of application: **07.07.2004**
(21) Application number: 02396191.5
(22) Date of filing: 30.12.2002
(51) Int. Cl.: H04Q 7/32

(54) **Download of application scripts to a mobile terminal by SMS**

(71) Applicant: Nokia Corporation, 02150 Espoo (FI)
(72) Inventor: Piiroinen, Simo, 33540 Tampere (FI); Tokkonen, Timo, 90800 Oulu (FI); Takaluoma, Antti, 91100 Li (FI)
(74) Representative: Antila, Harri Jukka Tapani

(57) **Abstract**

The invention relates to a method for utilizing a bytecode script of application software in terminal equipment of a telecommunications system. In the method according to the invention the bytecode script of application software is stored (304) in at least one short message and the bytecode script of the at least one short message is executed (312) on the terminal equipment. The invention also relates to a terminal equipment of a telecommunications system arranged to utilize a bytecode script of application software. The bytecode script of application software is stored in at least one short message and the terminal equipment comprises means (202, 212, 214) for executing the bytecode script of application software stored in at least one short message.

## Description

### Field

The invention relates to a method for utilizing bytecode script of application software in terminal equipment of telecommunications system and terminal equipment of a telecommunications system arranged to utilize a bytecode script of application software.

### Background

It is typical that the manufacturers or service providers supply the terminal equipment used in today's telecommunications systems with appropriate application software. In order to obtain new application software, for example, into the terminal equipment, such as a mobile phone, it has usually been necessary to take the mobile phone to a given service provider who has been able to provide the phone with new application software. Programming application software into the mobile phones generally requires that the mobile phones be taken to the service providers.

Additionally, in prior art telecommunications systems no easy programming methods exist that the users of the terminal equipment of the telecommunications system could employ independently. On the contrary, it is usually simply impossible for the users to program any application software to mobile phones. Programming the application software requires at least a hardware connection to another device, such as a computer, for example.

### Brief description of the invention

It is an object of the invention to provide an improved method for utilizing a bytecode script of application software in a portable electronic device and an improved portable electronic device. This is achieved by a method for utilizing a bytecode script of application software in terminal equipment of a telecommunications system, wherein the bytecode script of application software is stored in at least one short message and the method comprises executing the bytecode script of the at least one short message on the terminal equipment.

The invention also relates to terminal equipment of a telecommunications system arranged to utilize a bytecode script of application software. In the terminal equipment of the invention, the bytecode script of application software is stored in at least one short message and the terminal equipment comprises means for executing the bytecode script of application software stored in at least one short message.

Preferred embodiments of the invention are described in the dependent claims.

The method and terminal equipment of the invention provide several advantages. Obtaining application software into the terminal equipment is simple. The method is also quick and easy to use and there is no need for a large memory space. The device of the invention is also cheap to implement. Also, programming application software to the terminal equipment becomes possible for the users.

### List of the drawings

In the following, the invention will be described in greater detail with reference to the preferred embodiments and the accompanying drawings, in which
Figure 1 shows an example of the structure of a telecommunications system,
Figure 2 shows an example of terminal equipment, and
Figures 3 and 4 are signal sequence flow diagrams illustrating methods for utilizing a bytecode script of application software in terminal equipment.

### Description of the embodiments

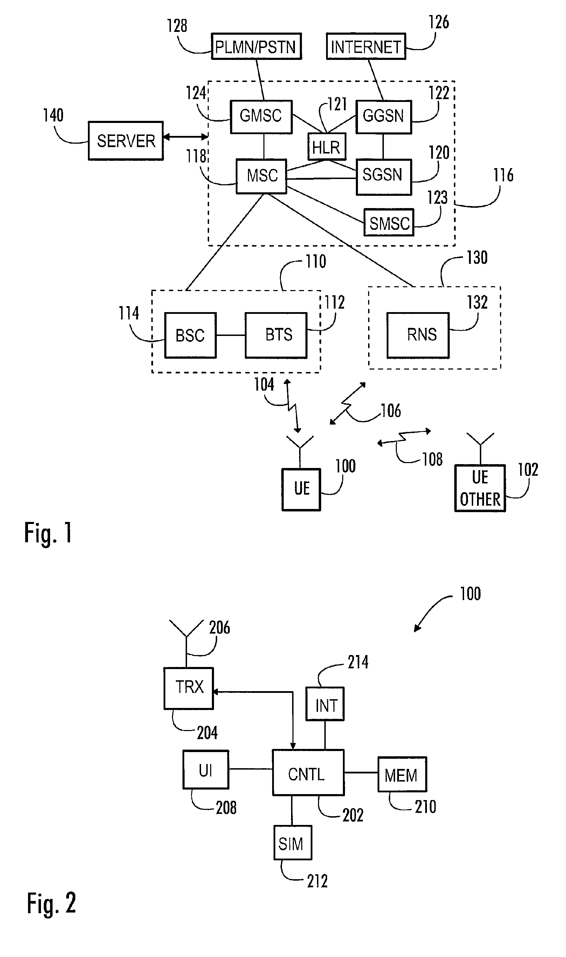

The embodiments of the invention are applicable in terminal equipment, such as in mobile stations used as a terminal in telecommunications systems comprising one or more base stations and terminals communicating with the base stations. With reference to Figure 1, examine an example of a structure of a telecommunications system in which the preferred embodiments of the invention can be applied. The structure and functions of the elements of the telecommunications system are not described in detail because they are generally known. The telecommunications system in Figure 1 is arranged to set up connections 104, 106, 108 between different terminal equipment 100, 102 in the telecommunications system or between the terminal equipment 100, 102 and an external network 126, 128 for example.

The main parts of a telecommunications system are a core network 116, a base station system 110, a radio access network 130 and terminal equipment 100, 102. On a general level, the telecommunications system can also be defined to comprise terminal equipment, which is also known as a subscriber terminal and mobile phone, for instance, and a network part, which comprises the fixed infrastructure of the telecommunications system, i.e. the core network, radio access network and base station system.

The structure of the core network 116 corresponds to a combined structure of the GSM and GPRS systems. The GSM network elements are responsible for establishing circuit-switched connections, and the GPRS network elements are responsible for establishing packet-switched connections, some of the network elements are, however, used in both systems. A server 140 maintained by a service provider, such as an operator, controls the core network 116.

A mobile services switching centre (MSC) 118 is the centre point of the circuit-switched side of the core network 116. The same mobile services switching centre 118 can be used to serve the connections of both the radio access network 130 and the base station system 110. The tasks of the mobile services switching centre 118 include: switching, paging, user equipment location registration, handover management, collection of subscriber billing information, encryption parameter management, frequency allocation management, and echo cancellation.

Large core networks 116 may have a separate gateway mobile services switching centre (GMSC) 124, which takes care of circuit-switched connections between the core network 100 and external networks 128. An external network 128 can be for instance a public land mobile network (PLMN) or a public switched telephone network (PSTN).

A home location register (HLR) 121 contains a permanent subscriber register, i.e. the following information, for instance: an international mobile subscriber identity (IMSI), a mobile subscriber ISDN number (MSISDN), an authentication key, and when the radio system supports GPRS, a packet data protocol (PDP) address.

A serving GPRS support node (SGSN) 120 is the centre point of the packet-switched side of the core network 116. The main task of the serving GPRS support node 120 is to transmit and receive packets with the user equipment 100, 102 supporting packet-switched transmission by using the radio access network 130 or the base station system 110. The serving GPRS support node 120 contains subscriber and location information related to the user equipment 100, 102.

A gateway GPRS support node (GGSN) 122 is the packet-switched side counterpart to the gateway mobile services switching centre 124 of the circuit-switched side with the exception, however, that the gateway GPRS support node 122 must also be capable of routing traffic from the core network 116 to external networks 126, whereas the gateway mobile services switching centre 124 only routes incoming traffic. In our example, the Internet represents external networks 126.

SMSC (Short Message Service Centre) 123 is an element through which short messages are transmitted and in which they can be stored for later transmission if the receiver is not reached, for example.

The base station system 110 comprises a base station controller (BSC) 114 and a base transceiver station (BTS) 112. The base station controller 114 controls the base transceiver station 112. The base station controller 114 takes care of the following tasks, for instance: radio resource management of the base transceiver station 112, intercell handovers, frequency control, i.e. frequency allocation to the base transceiver station 112, management of frequency hopping sequences, time delay measurement on the uplink, implementation of the operation and maintenance interface, and power control.

The radio access network 130 comprises a radio network subsystem 132. The radio network subsystem is either the full part or only the access part of a UMTS terrestrial radio access network (UTRAN), offering the allocation and the release of specific radio resources to establish means of connection between terminal equipment 100, 102 and the UTRAN.

The terminal equipment 100, 102 is e.g. a mobile phone or another device including telecommunication means. The terminal equipment 100, 102 contains at least one transceiver for establishing a radio link 104, 106 to the radio access network 130 or base station system 110. The terminal equipment 100, 102 may also comprise the possibility of employing short-range communication; such as a transmitter-receiver function implemented using for example a Bluetooth chip, or an infrared or WLAN connection. In addition, the terminal equipment 100, 102 contains an antenna, user interface and battery.

The terminal equipment 100 is arranged to utilize a bytecode script of application software. In an embodiment of the invention, the bytecode script of application software is stored in at least one short message (SMS, Short Message Service) and the terminal equipment 100 comprises means for executing the bytecode script stored in the short message. In an embodiment of the invention, the bytecode script is stored in at least one short message by the server 140 of the telecommunications system or by terminal equipment 100, 102 of the telecommunications system. It is also possible to store the bytecode script of application software in the short message in an external network 126, 128.

If the bytecode script is stored in the short message by the server 140, for example, then the short message comprising the bytecode script can be transmitted to the terminal equipment 100, 102 when needed. In an embodiment of the invention, it is possible that the terminal equipment 100, 102 requests the bytecode script from the server 140 or another terminal equipment 100, 102 of the communications system, and then the short message comprising the bytecode script is transmitted to the terminal equipment 100, 102. It is also possible that a short-range connection 108 between the terminal equipment 100, 102 is established and the bytecode script is exchanged via the short-range connection and then stored in at least one short message.

Figure 2 shows an example of terminal equipment 100. A control unit 202, typically implemented by means of a microprocessor and software or separate components, controls the basic functions of the terminal equipment 100. The user interface 208 of the terminal equipment 100 may comprise a display, a loudspeaker and a keypad part. Depending on the type of terminal equipment 100, there may be different and a different number of user interface parts. The device of Figure 2, such as a mobile station, also includes means 204 known in the art that implement the functions of a mobile station and include speech and channel coders, modulators and RF parts. The device also comprises an antenna 206.

The terminal equipment 100 comprises a SIM (Subscriber Identity Module) card 212; a smart card that contains security related information, subscriber related information and algorithms. Also, files containing varying information, such as phone numbers and short messages (SMS, Short Message Service), can be stored in the SIM card 212. The terminal equipment 100 also comprises a memory 210. The memory 210 can be in the SIM card 212, for example.

The bytecode scripts are programs performing specific applications. Application software is dynamically programmed, for example, using scripting languages, such as a BASIC (beginners all-purpose symbolic instruction code) script code language or a nitpicking BASIC language. In an embodiment of the invention, the terminal equipment 100 comprises at least one program translator 214, such as a compiler or an interpreter, for processing bytecode scripts. The compiler and the interpreter are used to translate a higher-level language into machine language. The compiler is used to produce an abstract bytecode script that can be executed in the terminal equipment 100. The interpreter may be used to execute the bytecode script. The interpreters are easy to implement and do not require large memory in the terminal equipment 100.

In an embodiment of the invention, the bytecode script of application software is stored in at least one short message and the terminal equipment 100 comprises a program translator, such as the interpreter 214, for executing the bytecode script of application software stored in at least one short message. According to an embodiment of the invention, the short message comprising the bytecode script of application software is received from a server or another terminal equipment of the telecommunications system. It is also possible that the bytecode script of application software is written and stored in the short message in the terminal equipment 100 by the user of the terminal equipment 100, for example. The bytecode script stored in the short message is in an executable form, for example. Before the bytecode script is stored in the short message, it is first translated into the executable form. The short message comprising the bytecode script is saved in the memory 210 of the terminal equipment 100.

In an embodiment of the invention, the bytecode script of a given application software, such as a game, is in more than one short message, and the bytecode script stored in a specific short message is a subroutine of the application software, such as one level of the whole game. The terminal equipment 100 may request the subroutine from a server or another terminal equipment of the telecommunications system when the execution of the application software is at a given phase or the execution of another subroutine ends, for example. In an embodiment of the invention it is first checked in the terminal equipment 100 whether the required subroutine is already stored in the terminal equipment 100, for example, in the memory 210 of the terminal equipment 100. If the subroutine is not found in the terminal equipment 100 then the subroutine is requested from a server or another terminal equipment of the telecommunications system. It is possible that the most used subroutines of the application software are stored in the memory 210 of the terminal equipment 100 and the subroutines that have been last used a long time ago are replaced by other subroutines when needed.

In an embodiment of the invention it is possible that instead of actual subroutines of the application software a specific data or service is requested from the server when the execution of the application software is at a given phase, for example. The specific data may then be used as a parameter or input data to the application software, for example. The application software uses, for example, a temperature value requested from an Internet web service as a parameter.

In another embodiment of the invention the terminal equipment 100 first receives the bytecode script via a short range connection between the terminal equipment 100 and another terminal equipment of the telecommunications system, and then translates and stores the received bytecode script in at least one short message. In an embodiment of the invention the received bytecode script is already in SMS (Short Message Service) format and the short message containing the bytecode script is received via SMS communication protocol by a cable or other ways of communication.

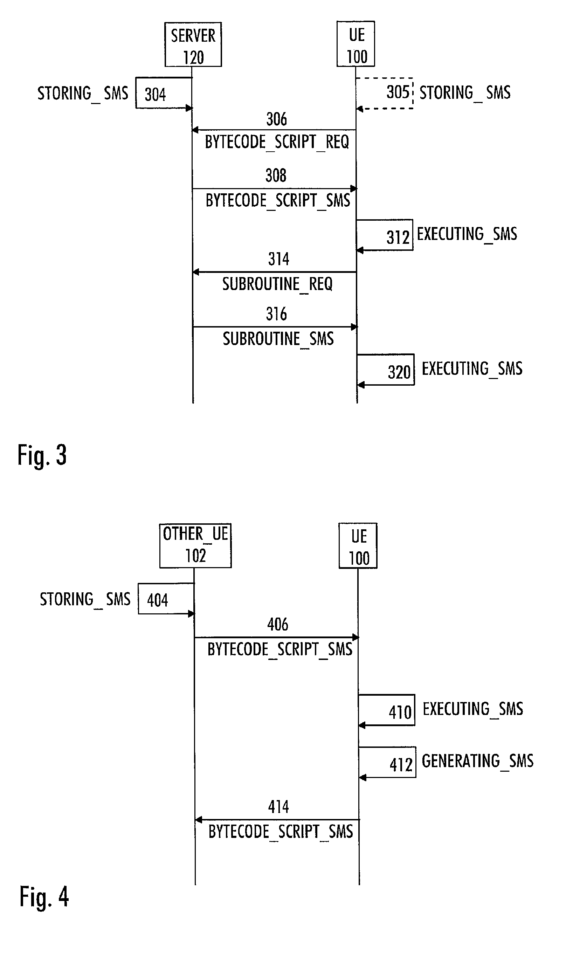

Figure 3 shows a signal sequence flow diagram illustrating a method for utilizing a bytecode script of application software in terminal equipment of a telecommunications system. The first vertical line and the horizontal arrows entering and diverging from the first vertical line in Figure 3 illustrate the different phases of the method executed by the server 120 and the signalling that is received and transmitted by the server 120. The second vertical line and the horizontal arrows entering and diverging from the second vertical line in Figure 3 illustrate the different phases of the method executed by the terminal equipment 100 and also the signalling that is received and transmitted by the terminal equipment 100. The dashed arrow in Figure 3 illustrates an alternative phase of the method.

Let us next look at Figure 3 and consider a situation where a user of the terminal equipment, such as a mobile phone 100, wishes to play a game with his mobile phone 100, for example. In phase 304, the bytecode script for the game is stored in at least one short message by a game server 120. Alternatively, the bytecode script for the game may be written, translated and stored in the short message with the mobile phone 100 by the user.

The user of the mobile phone 100 knows that the game server 120 in its databases maintains in the game server's 120 databases the bytecode script of the game he wishes to play, for example. In phase 306, a request for the bytecode script of the game is sent to the game server 120 from the mobile phone 100. The request can be sent by means of a short message made by the user of the mobile phone 100, for example. In phase 308, as a result of receiving the request for the bytecode script of the game, the game server 120 sends a short message comprising the bytecode script of the game to the mobile phone 100.

In phase 310, the received bytecode script for the requested game is executed on the mobile phone 100. The short message comprising the bytecode script for the game can be stored in the mobile phone 100 memory such as is usual in the case of customary short messages. The user of the mobile phone 100 can then play the game whenever he wants.

Let us next consider a situation where the execution of the received bytecode script of the game ends and the user of the mobile phone 100 wishes to continue the game to the next game level, for example. In phase 314, a request for a subroutine of the application software, here, the next game level of the game, is sent to the game server 120 from the mobile phone 100. Alternatively, the request for the next game level is sent to an external network server or to some other place where application software can be stored. Thus, the subroutines of the application software, that is, the different game levels, can be stored in different places as well. It is possible that the mobile phone 100 sends the request for the next game level automatically when the execution of the game is at a given phase or the execution of another subroutine ends, for example. The user of the mobile phone 100 can also initiate the sending of the request for the subroutines whenever he wants, for example. In phase 316, the requested next game level is sent to the mobile phone 100 in a short message. Finally, the next game level is executed 320 on the mobile phone 100.

As the bytecode script of application software may be stored in servers, that is, in the game server 120, for example, there is no need to store all the application software the user ever wishes to use in the mobile phone 100 memory. A great amount of memory space stays free for other purposes when the application software is obtained to the mobile phone only when needed.

Figure 4 shows a signal sequence flow diagram illustrating a method for utilizing a bytecode script of application software in terminal equipment 100, 102 of a telecommunications system. The second vertical line and the horizontal arrow entering and diverging from it illustrate the different phases of the method executed by the first terminal equipment 100 and also the signalling that is received and transmitted by the first terminal equipment 100. The first vertical line and the horizontal arrow entering and diverging it are illustrate the different phases of the method executed by the second terminal equipment 102 and the signalling that is received and transmitted by the second terminal equipment.

Let us next consider a situation where two users of terminal equipment 100, 102, such as mobile phones, wish to exchange application software with each other. In phase 404, the bytecode script of application software is stored in a short message by the second terminal equipment 102. The user of the second terminal equipment 102 has received the short message comprising the bytecode script from the Internet, for example. It is also possible that the user of the second terminal equipment 102 has written and translated the bytecode script and stored it in the short message by himself with the means of the second terminal equipment 102, for example. In phase 406, the short message comprising the bytecode script is sent to the first user equipment 100.

After the first user equipment 100 has received the short message sent in phase 406, the bytecode script in the short message is executed on the first terminal equipment 100 in phase 410. Next, in phase 412, another bytecode script of application software is generated, translated and stored in a short message by the first terminal equipment 100. This bytecode script generated in the first terminal equipment 100 may be intended to be a specific acknowledgement or verification to the user of the second terminal equipment 102, for example. Finally, the short message generated in the first terminal equipment 100 is sent to the second terminal equipment 102 in phase 414.

Even though the invention is described above with reference to an example according to the accompanying drawings, it is clear that the invention is not restricted thereto but it can be modified in several ways within the scope of the appended claims.

## Claims

1. A method for utilizing a bytecode script of application software in terminal equipment of a telecommunications system, **characterized by**:
(304) the bytecode script of application software is stored in at least one short message;
(312) executing the bytecode script of the at least one short message on the terminal equipment.

2. The method of claim 1, **characterized in that** the bytecode script is stored (304, 305, 404) by a server of the telecommunications system or by terminal equipment of the telecommunications system.

3. The method of claim 1, **characterized in that** the method further comprises receiving (308) in the terminal equipment at least one short message comprising the bytecode script of application software from a server or another terminal equipment of the telecommunications system.

4. The method of claim 1, **characterized in that** the method further comprises the terminal equipment requesting (306) the bytecode script from a server or another terminal equipment of the communications system.

5. The method of claim 4, **characterized in that** the bytecode script is requested by sending at least one short message for requesting the bytecode script to a server or to another terminal equipment of the telecommunications system.

6. The method of claim 1, **characterized in that** the bytecode script of the application software is stored in more than one short message, and the bytecode script in at least one short message is a subroutine of the application software.

7. The method of claim 6, **characterized in that** the method further comprises requesting (314) the subroutine from a server or another terminal equipment of the telecommunications system when the execution of the application software is at a given phase or the execution of another subroutine ends.

8. The method of claim 1, **characterized by** receiving the bytecode script via a short range connection between the terminal equipment and another terminal equipment of the communications system, and storing the received bytecode script in at least one short message.

9. The method of claim 1, **characterized in that** the bytecode script is based on a BASIC (beginners all-purpose symbolic instruction code) script code.

10. Terminal equipment of a telecommunications system arranged to utilize a bytecode script of application software, **characterized in that** the bytecode script of application software is stored in at least one short message and the terminal equipment comprises means (202, 212, 214) for executing the bytecode script of application software stored in at least one short message.

11. The terminal equipment of claim 10, **characterized in that** the terminal equipment comprises means (202, 210, 212) for storing the bytecode script of the application software in at least one short message.

12. The terminal equipment of claim 10, **characterized in that** the terminal equipment comprises means (202, 206, 212) for receiving the short message comprising the bytecode script of application software from a server or another terminal equipment of the telecommunications system.

13. The terminal equipment of claim 10, **characterized in that** the terminal equipment comprises means (202, 206, 210) for requesting the bytecode script from a server or another terminal equipment of the telecommunications system.

14. The terminal equipment of claim 10, **characterized in that** the bytecode script of the application software is in more than one short message, and the bytecode script in at least one short message is a subroutine of the application software.

15. The terminal equipment of claim 14, **characterized in that** the terminal equipment comprises means (202, 206) for requesting the subroutine from a server or another terminal equipment of the telecommunications system when the execution of the application software is at a given phase or the execution of another subroutine ends.

16. The terminal equipment of claim 10, **characterized in that** the terminal equipment comprises means (202, 206, 210, 212) for:
receiving the bytecode script via a short range connection between the terminal equipment and another terminal equipment of the telecommunications system, and
storing the received bytecode script in at least one short message.

17. The terminal equipment of claim 10, **characterized in that** the bytecode script is based on a BASIC (beginners all-purpose symbolic instruction code) script code.
